# EUROPEAN PATENT SPECIFICATION

(11) **EP 0 742 360 B1**
(45) Date of publication and mention of the grant of the patent: **20.02.2002**
(21) Application number: 96107615.5
(22) Date of filing: 13.05.1996
(51) Int. Cl.: F02D 41/34

(54) **Fuel injection apparatus and method for a two-stroke engine**
Kraftstoffeneinspritzeinrichtung und Verfahren für einen Zweitaktmotor
Dispositif et méthode d'injection de carburant pour moteur à deux temps

(30) Priority: 12.05.1995 JP 11429195
(43) Date of publication of application: 13.11.1996
(73) Proprietor: YAMAHA HATSUDOKI KABUSHIKI KAISHA, Iwata-shi Shizuoka-ken, 438 (JP)
(72) Inventor: Motoyama, Yu, c/o Yamaha Hatsudoki K.K., Iwata-shi, Shizuoka-ken (JP); Nakamura, Michihisa, c/o Yamaha Hatsudoki K.K., Iwata-shi, Shizuoka-ken (JP); Moriya, Yoshihiko, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- EP-A- 0 661 432
- FR-A- 2 717 227
- US-A- 5 078 107
- US-A- 5 092 287
- US-A- 5 170 760

## Description

This invention relates to an internal combustion engine of the two-stroke cycle type comprising at least one cylinder covered with a cylinder head and accommodating a slidably reciprocable piston connected via a connecting rod to a crankshaft which is located in a crank chamber, whereby said cylinder, said piston and said cylinder head define a combustion chamber, a scavenging route, an exhaust route, a fuel injection device for injecting fuel into said cylinder, and a control device adapted to control the operation of said fuel injection device such that at least during a medium load range of said engine fuel is injected at least in two installments during one revolution of said crankshaft, and a method of providing an internal combustion engine of the two-stroke cycle type with fuel, said engine comprising at least one cylinder covered with a cylinder head and accommodating a slidably reciprocable piston connected via a connecting rod to a crankshaft which is located in a crank chamber, whereas said cylinder, said piston and said cylinder head define a combustion chamber, a scavenging route, an exhaust route, and a fuel injection device for injecting fuel into said cylinder, whereas at least during the medium load range of said engine fuel is injected with at least two installments during one revolution of said crankshaft.

Such an internal combustion engine as well as the method are known from US-A-5 078 107. However, this internal combustion engine is not able to adapt the fuel injection during all speed and load ranges sufficiently. Here fuel is injected once during very high and low loads, in variable amounts; during medium load the second fuel installment is finished shortly before ignition.

Moreover, the direct fuel injection into the engine combustion chamber using a fuel injection device, or the so-called in-cylinder injection, is conventionally employed in Diesel engines.

On the other hand, in two stroke cycle engines, it has been common practice to supply fuel through a fuel injection device or carburettor disposed in the intake passage, and supply mixture through the crank chamber and scavenging passage to the combustion chamber. However, since there have been problems such as that, when mixture flows through the crank chamber, fuel adheres to the crank chamber wall and mixture of expected air-fuel ratio does not reach the combustion chamber. In order to solve such a problem and perform more exact control of air-fuel ratio, demands for the in-cylinder injection also in the two stroke cycle engines like the Diesel engines is increasing, in which fuel is injected directly into the combustion chamber.

The two stroke cycle engine has a problem of mixture blow by because ports are covered and uncovered with the piston. Therefore, when the in-cylinder injection is performed, it is preferable when the amount of injected fuel is small such as in medium and low load ranges to inject fuel as near to the ignition timing and as near to the vicinity of the ignition plug as possible. However, since the fuel injection device for the gasoline engine such as the two stroke cycle engine cannot inject fuel at a high pressure as is the case in the Diesel engine, if fuel is injected when the pressure in the cylinder is high such as near the ignition timing, a problem arises that the injection period, namely the amount of injected fuel, is considerably restricted.

The problem described above is not so significant in the low speed range even if fuel is injected near the top dead center, namely when the pressure in the cylinder is high, because of small amount of injected fuel. In the high speed range, since the amount of injected fuel is large, pre-mixed combustion can be carried out in which fuel injection is started at an early timing so that the injection is over near the bottom dead center, and fuel is thoroughly mixed with air before being ignited. Therefore, the problem described above does not occur.

However, when the so-called stratified combustion is intended in the low load range in which fuel is injected near the ignition timing, and the pre-mixed combustion is intended in the high load range in which fuel is injected significantly before the ignition timing, the fuel amount is excessive to be injected near the ignition timing in the medium load range where transition from the stratified combustion to the pre-mixed combustion occurs and the fuel amount is too small for the fuel injection to be over at an early time for the pre-mixing. Such a situation is unstable and the problem is very serious in the medium load range.

The object of this invention is to provide a fuel injection method and a fuel injection controller capable of solving the above-described problems in the injection in the cylinders of the two cycle engine by injecting appropriate amount of fuel over the entire speed range.

Accordingly, it is an objective of the present invention to provide an improved internal combustion engine of the two stroke cycle type as well as a method as indicated above which always facilitate the injection of an appropriate amount of fuel over the entire engine speed range.

According to the invention this objective is solved for an internal combustion engine of the two stroke cycle type as indicated above in that said control device is adapted to control the low load range, the medium load range and the high load range of said engine such that during the low load range fuel is injected once immediately before the ignition, whereas according to the load increase or decrease within said low load range the fuel injection amount is varied by varying the end of the fuel injection, that during the medium load range the first installment of a specified amount of fuel is injected before the ignition and the second installment of an amount of fuel is injected immediately before the ignition, whereas according to the load increase or decrease within said medium load range the fuel amount of the first installment is varied, and that during the high load range fuel is injected in one installment the amount of which varies with the load change during said high load range.

Further, according to the invention this objective is solved for a method as indicated above in that said control device controls the low load range, the medium load range and the high load range of said engine such that during the low load range fuel is injected once immediately before the ignition, whereas according to the load increase or decrease within said low load range the fuel injection amount is varied by varying the end of the fuel injection, that during the medium load range the first installment of a specified amount of fuel is injected before the ignition and the second installment of an amount of fuel is injected immediately before the ignition, whereas according to the load increase or decrease within said medium load range the fuel amount of the first installment is varied, and that during the high load range fuel is injected in one installment the amount of which varies with the load change during said high load range.

According an embodiment of the present invention said control device controls said fuel injection device on the basis of detected engine operating conditions which may be a crank angle, an engine speed and an engine load.

According to a preferred embodiment of the present invention said control device comprises an ignition timing control section provided with signals corresponding to an engine speed, a crank angle and a throttle opening degree, a fuel injection timing control section provided with signals corresponding to an engine speed and a crank angle, and the load calculating section provided with signals corresponding to a throttle opening degree.

In order to further enhance the control operation of said control device it is advantageous when said ignition timing control section is provided with a three dimensional map storing data determined in advance and said fuel injection timing control section is provided with a two dimensional map storing data determined in advance.

Other preferred embodiments of the present invention are laid down in further dependent claims.

In the following, the present invention is explained in greater detail with respect to several embodiments thereof in conjunction with the accompanying drawings, wherein:
FIG. 1 is a schematic side view of a motorcycle (1) provided with the fuel injection controller of this invention;
FIG. 2 shows a schematic cross section of the two cycle engine (11);
FIG. 3 is a graph of air amount that can flow through the intake route plotted against throttle opening (namely the twisted degree of the throttle grip);
FIG. 4 is a schematic block diagram of the controller;
FIG. 5 is a graph of injection timing and ignition timing with the vertical axis representing the crank angle and the horizontal axis representing the engine load;
In FIG. 6,
   (a) is an example diagram of injection timing and ignition timing in the low load range (A) in terms of crank angle with respect to TDC and BDC;
   (b) is an example diagram of injection timing and ignition timing in the medium load range (A) in terms of crank angle with respect to TDC and BDC;
   (c) is an example diagram of injection timing and ignition timing in the high load range (A) in terms of crank angle with respect to TDC and BDC; and

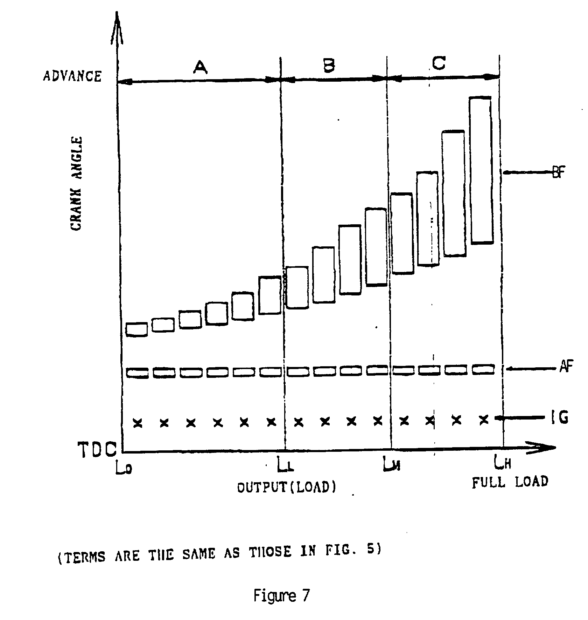

FIG. 7 is a graph of injection timing and ignition timing of another embodiment with the vertical axis representing the crank angle and the horizontal axis representing the engine load.

An embodiment of the fuel injection method and fuel injection controller of this invention for two stroke cycle engines will be hereinafter described in reference to the appended drawings.

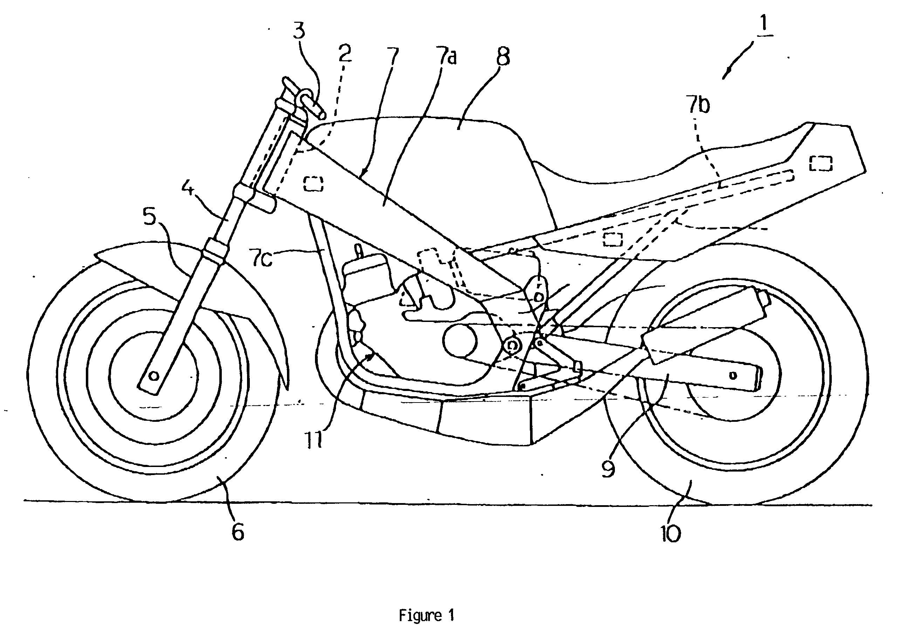

FIG. 1 is a schematic side view of a motorcycle 1 provided with the fuel injection controller of this invention.

A head pipe 2 supports a rotatable steering shaft 4 with its top end provided with handlebars 3. The bottom end of the steering shaft 4 is connected to a bifurcated front fork 5. The front fork 5 supports between its prongs a rotatable front wheel 6. The head pipe 2 is also connected to a frame 7 . The frame 7 comprises a right and left pair of main frames 7a with their front ends fixed to the head pipe 2, rear frames 7b extending from the rear parts of the main frames 7a, and down tubes 7c extending once downward from the front part of the frame 7 and further extending toward the rear of the vehicle and connecting to the rear end of the frame 7 . A fuel tank 8 is mounted on the main frames 7a. Rear ends of swing arms 9 support a rear wheel 10 and front ends of the swing arms 9 are swingably supported with a shaft on the main frames 7a.

A two stroke cycle engine 11 is mounted with the main frames 7a and the down tubes 7c.

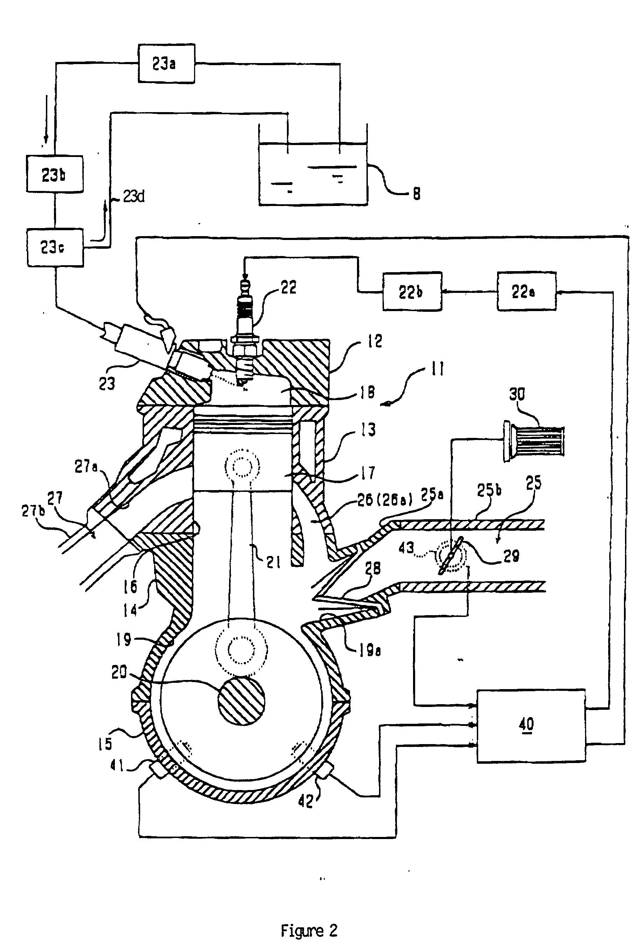

FIG. 2 shows a schematic cross section of the engine 11.

The engine 11 is constituted by piling up a cylinder head 12, cylinder blocks 13, 14 and a crankcase 15. Inside the engine is formed a cylinder 16 . A piston 17 defines the inside of the cylinder 16 into a combustion chamber 18 and a crank chamber 19. The crank chamber 19 supports a crankshaft 20 for free rotation. The piston 17 is disposed for free vertical sliding in the cylinder 16. The crankshaft 20 is connected through a connecting rod 21 to the piston 17.

The engine 11 is provided with an intake route 25, a scavenging route 26, and an exhaust route 27. The intake passage 25 comprises a connecting tube 25a and an intake tube 25b , with one end of the connecting tube 25a open to an intake inlet 19a of the crank chamber 19 and the other end connected to the intake tube 25b. A reed valve 28 is provided to seal and close the intake inlet 19a . The intake inlet 19a is opened when the pressure in the crank chamber 19 becomes negative as the piston 17 ascends, and closed when the pressure in the crank chamber 19 becones equal to or exceeds the pressure on the upstream side (namely on the connecting tube 25a side) of the reed valve 28.

The scavenging route 26 comprises a scavenging passage 26a formed through the cylinder blocks 13, 14 , with its one end connected to the combustion chamber side of the cylinder 16 and the other end connected to the crank chamber side of the cylinder 16. After the mixture is burned in the combustion chamber 18 , the piston 17, descends to uncover the combustion chamber side end of the scavenging passage 26a and make connection between the crank chamber 19 and the combustion chamber 18, and air drawn into the crank chamber 19 is forced into the combustion chamber 18.

The exhaust route 27 comprises an exhaust passage 27a, formed in the cylinder block 13 and an exhaust tube 27b. One end of the exhaust passage 27a is connected to the combustion chamber side of the cylinder 16 and the other end connected to the exhaust tuba 27b. The exhaust route 27 is uncovered at a timing earlier than that of the scavenging route 26 after the combustion of mixture in the combustion chamber 18 as the piston 17 descends to start exhausting the burned gas out of the combustion chamber 18 . The burned gas remaining in the combustion chamber is forced out by air flowing through the scavenging route 26 which is uncovered at a timing later than that of the exhaust route 26 into the combustion chamber 18 , and compression for the next combustion is performed with the piston 17.

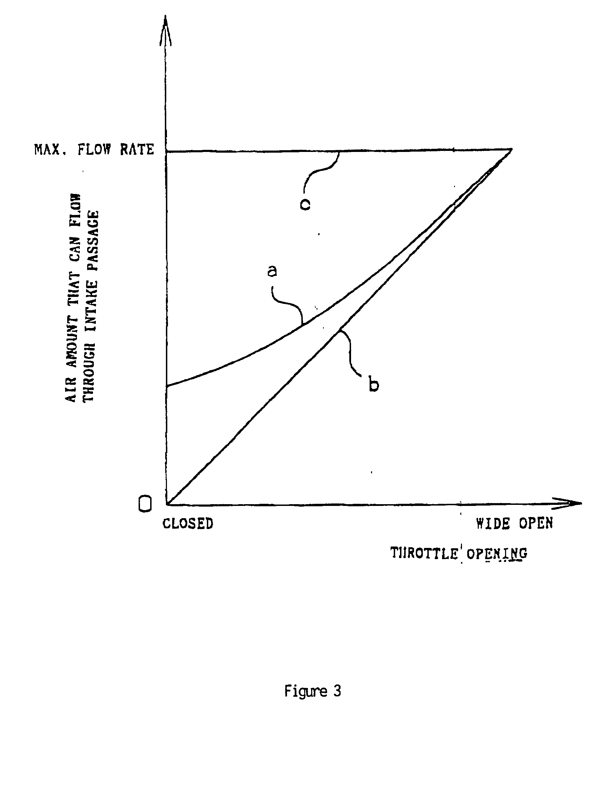

The intake tube 25b is provided with a throttle valve 29. of a butterfly type for varying the cross-sectional area of the intake route by rotation according to the opening degree of a throttle grip 30. As shown in FIG. 3, the throttle valve 29 is designed not to completely close the intake route even when the throttle grip is fully closed so that air is supplied to the combustion chamber 18 even when the throttle grip is fully closed. In FIG. 3, the curve (a) shows the data when the throttle valve 29 is used. The curve (b) shows the data when a throttle valve is used which is fully closed when the throttle grip is fully closed. The curve (c) shows the data when no throttle is used, that is, for an engine without a throttle.

The cylinder head 12 is provided with an ignition plug 22, and a fuel injection device 23 . The igniting portion of the ignition plug 22 is exposed to the combustion chamber 18 for igniting mixture in the combustion chamber 18 . The nozzle portion of the fuel injection device 23 is exposed to the combustion chamber 18 and directed to inject fuel as shown in FIG. 2 with the dotted line toward the ignition plug (22) in the combustion chamber 18.

The ignition timing of the ignition plug 22 and the fuel injection timing of the fuel injection device 23 are controlled with a control device or controller 40.

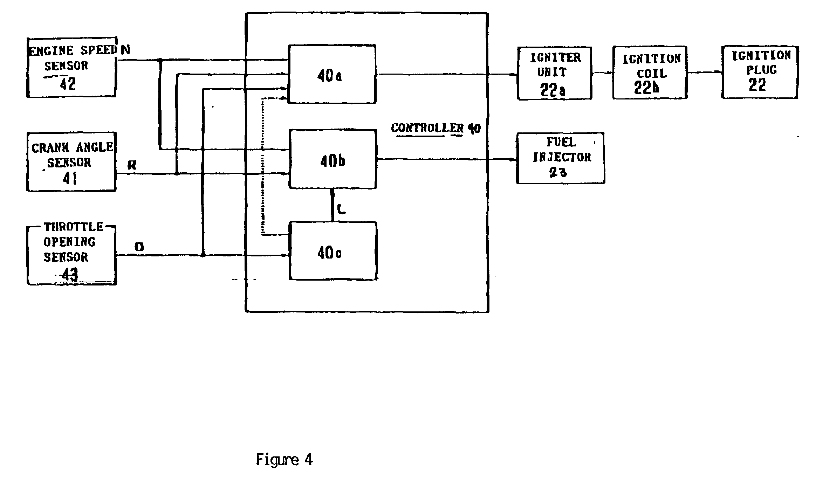

FIG. 4 is a schematic block diagram of the controller 40.

To the controller 40 is input information on crank angle (R), engine speed (N), and throttle valve opening degree (0), respectively from a crank angle sensor 41 , an engine speed sensor 42, and a throttle opening sensor 43.

The controller 40 is also provided with an ignition timing control section 40a for determining the ignition timing, and a fuel injection timing control section 40b for determining the fuel injection timing to actuate the ignition plug 22 and the fuel injection device 23 according to the determined timings.

The structure and function of the controller 40 will be hereinafter described more in detail.

Output signals from the throttle opening sensor 43 or its load calculating section 40c and the engine speed sensor 42 (throttle opening degree (0) or load calculation value (L) and engine speed (N)) are input to the ignition timing control section 40a. The ignition timing control section 40a is provided with a three dimensional map storing data measured in advance through tests on the appropriate timing for various throttle openings or loads and engine speeds. The map determines appropriate ignition timings from the output signals (O) or (L) and (N) from the sensors 43, 42 . To the ignition timing control section 40a is also input crank angle information (R) (hereinafter referred to as crank angle (R)). When the crank angle (R) agrees with the ignition timing detected from the map, an ignition timing generation signal is output to an igniter unit 22a . The igniter unit 22a comprises a known circuit for use in transistor type ignition and actuates an internal transistor (not shown) with the ignition timing generation signal to generate about 300 V of voltage by self induction in an ignition coil 22b. The ignition coil 22b causes spark discharge on the ignition plug 22 by utilizing mutual induction effect when a high voltage is generated by the igniter unit 22a.

The output signal from the throttle opening sensor 43 (throttle opening (O)) is input to the load calculating section 40c where the current load (L) is calculated from the throttle opening (O) and the result is output to the injection timing control section 40b. To the fuel injection timing control section 40b are input the output (L) from the load calculating section 40c and the output (N) from the engine speed sensor 42. Also the fuel injection timing control section 40b is provided with a two dimensional map storing data measured in advance through tests on the appropriate fuel injection timing for various engine revolutions and loads, and determines appropriate fuel injection timing from the engine speed (N) and the load (L). The fuel injection timing control section 40b constantly receives output signals (crank angle R) from the crank angle sensor 41 and monitors the crank angle. When the crank angle (R) agrees with the fuel injection start timing of the fuel injection timing determined by the map, a fuel injection start signal is output to the fuel injection device 23 to cause it to start fuel injection. When the crank angle (R) agrees with the injection end timing of the fuel injection timing determined by the map, a fuel injection end signal is output to the fuel injection device 23 to cause it to end fuel injection. Fuel is pressure-supplied from the fuel tank 8 to the fuel injection device 23 . The fuel supplied from the fuel tank 8 is filtered with a filter 23b . Pressure of the fuel is regulated with a pressure regulator 23c. Required amount of fuel is sent to the fuel injection device 23 and injected from it in accordance with the injection timing signal (namely the fuel injection start signal and the fuel injection end signal) from the fuel injection timing control section 40b. Surplus amount of fuel at the pressure regulator 23c is returned through a fuel return line 23d to the fuel tank 8.

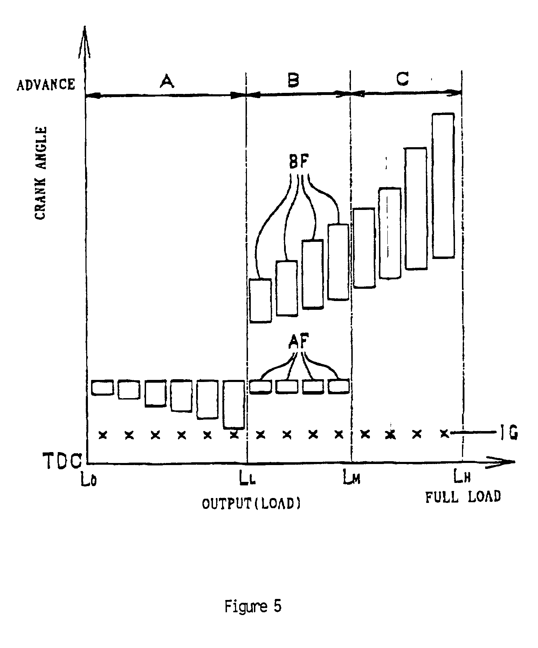

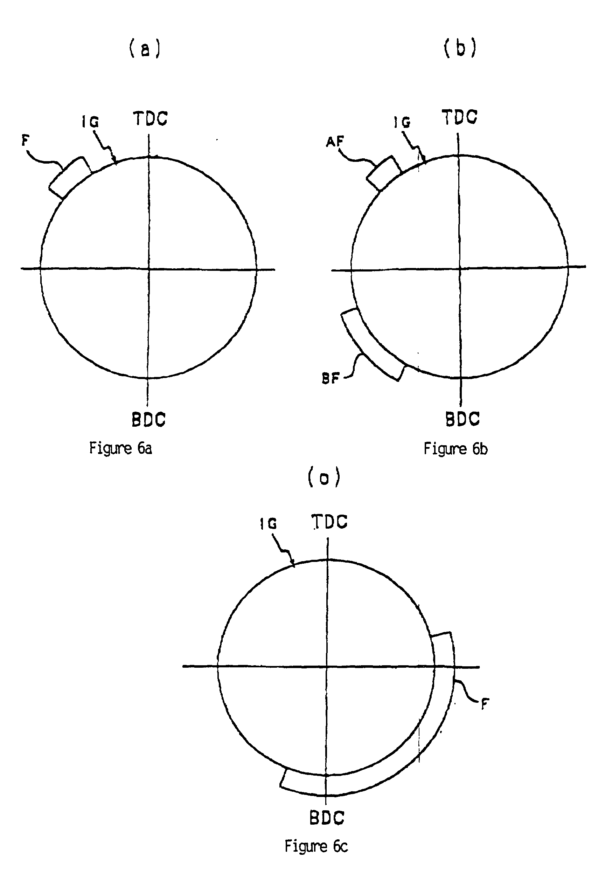

FIG. 5 is a graph of injection timing and ignition timing with the vertical axis representing the crank angle and the horizontal axis representing the engine load. FIGs. 6(a), 6(b), and 6(c) are timing diagrams showing injection timing and ignition timing in the load ranges (A), (B), and (C) described later in terms of crank angle with respect to TDC and BDC. FIG. 6(a) is for the low load range, FIG. 6(b) is for the medium load range, and FIG. 6(c) is for the high load range, respectively showing injection timing and ignition timing.

As shown in FIGs. 5 and 6, the controller 40 controls the fuel injection in three load (output) ranges; a low load range (L_{O} - L_{L}), a medium load range (L_{L} - L_{M}), and a high load range (L_{M} - L_{H}), respectively in different patterns. The ignition timing (IG) is also changed according to the engine speed and load, in this embodiment the ignition timing is about 10 degrees before TDC as an example.

In the low load range (A), the fuel injection is controlled to be made once immediately before the ignition timing, and according to increase and decrease in load (L) between (L_{O}) and (L_{L}), the fuel injection amount is changed by delaying the fuel injection end timing. Though the amount of fuel (F) injected in the low load range (A) is very small, since fuel is injected immediately before the ignition timing and concentrated around the ignition plug 22, thick mixture mass is produced at the time of ignition around the ignition plug 22. The amount of fuel (F) is smaller or mixture becomes thinner toward the lower layer in the combustion chamber 18 . Flame of thick mixture ignited with the ignition plug 22 gradually propagates to the lower layer to produce stratified combustion.

In the medium range (B), fuel injection is made in two installments. The first installment of specified amount of fuel is injected before the ignition (the preliminarily injected fuel is hereinafter called pre-injection fuel BF). The second installment is injected immediately before the ignition to the vicinity of the ignition plug (the fuel injected immediately before the ignition is hereinafter called ignition fuel AF). As the load (L) varies between L_{L} and L_{M}, injection amount of fuel (F) is changed by changing the amount of pre-injection fuel (BF) without changing the amount of ignition fuel (AF).

The injection amount of fuel (F) in the medium load range (B) is too much to be injected immediately before the ignition when the pressure in the cylinder is high as in the low load range (A), but too small to carry out pre-mixing by ending injection before the ignition timing as in the high load range (C). However, by dividing the injection in two installments, uniform mixture is produced in advance as the pre-injection fuel (BF) mixes with air. Then the ignition fuel (AF) forms thick mixture mass around the igniting portion of the ignition plug, the thick mixture mass ignited with the ignition plug, and burns. The mixture mass produced by the pre-injection fuel (BF) is then ignited with the flame of the thick mixture. Thus, reliable ignition and combustion is obtained.

The medium load range (B) where the fuel is injected in two installments may be set appropriately according to the characteristic of the engine used, for instance 0 % - 60 %, 10 % - 90 %, etc. of the full load.

In the high load range (C), injection of fuel (F) is started at an early timing, more specifically around the time when the piston 17 starts descending after the compression-combustion stroke, and finished considerably before the ignition timing. The amount of fuel F injected In the high load range (C) is more than enough even if blowby of mixture occurs through the opening of the exhaust route 27 and accordingly requires time for uniformly mixing with air. However, by arranging that injection is over considerably before the ignition timing as described above, fuel thoroughly mixes with air before the ignition timing to form uniform mixture mass in the combustion chamber. As a result, efficient combustion is obtained.

With the controller of this embodiment described above, while the fuel injection is made in two installments in the medium load range B only, this fuel injection method is not limited to this embodiment but the fuel injection way be made in plural number of installments over the entire load range, or in the low and medium load ranges (A) and (B), or in the medium and high load ranges (B) and (C). FIG. 7 is a graph of an example of injection timing and ignition timing for the fuel injection made in two installments over the entire load range. In engines of a characteristic in which knocking is likely to occur, knocking may be prevented in the high load range by dividing the fuel injection into plural number of installments and carrying out pre-mixed combustion of a rapid combustion speed. When rapid combustion speed is required at low load as in a downhill drive with a high engine speed, it is possible to increase the combustion speed while preventing unburned gas from being produced even in the stratified combustion where part of fuel is injected at an early timing.

In this embodiment, the fuel injection method and fuel injection device are described as employed in a two cycle engine 11 provided with a single ignition plug 22. However, the type of the two cycle engine is not limited to this embodiment but for instance two ignition plugs may be provided.

Furthermore, while the Igniter unit 22a is described as the ignition circuit for this embodiment, the structure of the ignition circuit is not limited to this embodiment but a CDI unit may be employed as a matter of course.

While this embodiment describes the fuel injection method and fuel injection device as employed in the two cycle engine 11 provided with the throttle valve 29 as an example, the intake type of the engine is not limited to this embodiment but may be of any type, for instance a two cycle engine provided with a throttle valve which completely closes the intake route when the throttle grip is completely closed, or a two cycle engine without a throttle valve. Furthermore, it is necessary to detect the engine load (L) with other means than the throttle valve opening sensor such as potentiometer provided at the throttle grip, etc.

## Claims

1. Internal combustion engine (11) of the two-stroke cycle type comprising at least one cylinder (16) covered with a cylinder head (12) and accommodating a slidably reciprocable piston (17) connected via a connecting rod (21) to a crankshaft (20) which is located in a crank chamber (19), whereby said cylinder (16), said piston (17) and said cylinder head (12) define a combustion chamber (18), a scavenging route (26), an exhaust route (27), a fuel injection device for injecting fuel into said cylinder (16), and a control device (40) adapted to control the operation of said fuel injection device (23) such that at least during a medium load range (B) of said engine (11) fuel is injected at least in two installments during one revolution of said crankshaft (20), wherein said control device (40) is adapted to control the low load range (A), the medium load range (B) and the high load range (C) of said engine (11) such that during the low load range (A) fuel is injected once immediately before the ignition, wherein according to the load increase or decrease within said low load range (A) the fuel injection amount is varied by varying the end of the fuel injection; during the medium load range (B) the first installment (BF) of a specified amount of fuel is injected before the ignition and the second installment (AF) of an amount of fuel is injected immediately before the ignition, wherein according to the load increase or decrease within said medium load range (B) the fuel amount of the first installment is varied, and wherein during the high load range (C) fuel is injected in one installment the amount of which varies with the load change during said high load range (C).

2. Internal combustion engine according to claim 1, **characterized in that** said control device (40) controls said fuel injection device (23) on the basis of detected engine operation conditions.

3. Internal combustion engine according to claim 2, **characterized in that** said engine operation conditions are a crank angle (R), an engine speed (N) and an engine load (L).

4. Internal combustion engine according to one of claims 1 to 3, **characterized by** a throttle (29) located within an intake route (25).

5. Internal combustion engine according to claim 3 or 4, **characterized in that** said control device (40) calculates said engine load (L) of the basis of a throttle opening degree (0).

6. Internal combustion engine according to claim 5, **characterized in that** said control device (40) comprises an ignition timing control section (40a) provided with signals corresponding to an engine speed (N), a crank angle (R) and a throttle opening degree (0), a fuel injection timing control section (40b) provided with signals corresponding to an engine speed (N) and a crank angle (R), and a load calculating section (40c) provided with signals corresponding to a throttle opening degree (0).

7. Internal combustion engine according to claim 6, **characterized in that** said ignition timing control section (40a) controls an igniter unit (22a) for igniting an ignition plug (22) via an ignition coil (22b), and that said fuel injection timing control section (40b) controls said fuel injection device (23).

8. Internal combustion engine according to claim 6 or 7, **characterized in that** said ignition timing control section (40a) is provided with a three-dimensional map storing data determined in advance, and that said fuel injection timing control section (40b) is provided with a two-dimensional map storing data determined in advance.

9. Internal combustion engine according to one of claims 1 to 8, **characterized in that** said control device (40) is adapted to control the operation of said fuel injection device (23) such that in all load ranges, i.e. the low load range (A), the medium load range (B) and the high load range (C) of said engine (11), fuel is injected at least in two installments during one revolution of said crankshaft (20).

10. Method of providing an internal combustion engine of the two-stroke cycle type with fuel, said engine (11) comprising at least one cylinder (16) covered with a cylinder head (12) and accommodating a slidably reciprocable piston (17) connected via a connecting rod (21) to a crankshaft (20) which is located in a crank chamber (19), whereas said cylinder (16), said piston (17) and said cylinder head (12) define a combustion chamber (18), a scavenging route (26), an exhaust route (27), and a fuel injection device for injecting fuel into said cylinder (16), wherein at least during the medium load range of said engine (11) fuel is injected with at least two installments during one revolution of said crankshaft (20), wherein said control device (40) controls the low load range (A), the medium load range (B) and the high load range (C) of said engine (11) such that during the low load range (A) fuel is injected once immediately before the ignition, wherein according to the load increase or decrease within said low load range (A) the fuel injection amount is varied by varying the end of the fuel injection; during the medium load range (B) the first installment (BF) of a specified amount of fuel is injected before the ignition and the second installment (AF) of an amount of fuel is injected immediately before the ignition, wherein according to the load increase or decrease within said medium load range (B) the fuel amount of the first installment is varied, and wherein during the high load range (C) fuel is injected in one installment the amount of which varies with the load change during said high load range (C).

11. Method according to claim 10, **characterized in that** engine operation conditions are detected, the respective signals of which are supplied to a control device (40) controlling the operation of said fuel injection device (23) on the basis of said supplied signals.

12. Method according to claim 11, **characterized in that** said control device (40) compares the supplied signals with advance stored data to control said fuel injection device (23) and an ignition of said engine (11).

13. Method according to claim 11 or 12, **characterized in that** said control device (40) controls the load ranges, the low load range (A), the medium load range (B) and the high load range (C) of said engine (11) such that during at least two of these load ranges (A, B, C) at least two installments of fuel injection are conducted.

## Patentansprüche

1. Brennkraftmaschine (11) vom Zweitakt- Typ mit zumindest einem Zylinder (16), bedeckt mit einem Zylinderkopf (12), der einen gleitend hin- und hergehenden Kolben (17) aufnimmt, verbunden über eine Pleuelstange (21) mit einer Kurbelwelle (20), die in einer Kurbelkammer (19) angeordnet ist, verbunden, wodurch der Zylinder (16), der Kolben (17) und der Zylinderkopf (12) eine Brennkammer (18) begrenzen, eine Spülstrecke (26), eine Auslaßstrecke (27), eine Kraftstoffeinspritzvorrichtung zum Kraftstoffeinspritzen in den Zylinder (16), und eine Steuervorrichtung (40), vorgesehen um den Betrieb der Kraftstoffeinspritzvorrichtung (23) zu steuern, so daß zumindest während eines Mittellastbereiches (B) des Motors (11) Kraftstoff in zumindest zwei Raten während einer Umdrehung der Kurbelwelle (20) eingespritzt wird, wobei die Steuervorrichtung (40) vorgesehen ist, den Niedriglastbereich (A), den Mittellastbereich (B) und den Hochlastbereich (C) des Motors (11) zu steuern, so daß während des Niedriglastbereiches (A) Kraftstoff einmal unmittelbar vor der Zündung eingespritzt wird, wobei entsprechend der Belastungszunahme oder - abnahme innerhalb des Niedriglastbereiches (A) die Kraftstoffeinspritzmenge variiert wird durch Verändern des Endes der Kraftstoffeinspritzung; während des Mittellastbereiches (B) die erste Rate (BF) einer bestimmten Kraftstoffmenge vor der Zündung eingespritzt und die zweite Rate (AF) einer Kraftstoffmenge wird unmittelbar vor der Zündung eingespritzt, wobei entsprechend der Belastungszunahme oder ―abnahme innerhalb des Mittellastbereiches (B) die Kraftstoffmenge der ersten Rate verändert wird, und während des Hochlastbereiches (C) Kraftstoff in einer Rate eingespritzt wird, dessen Menge sich mit der Belastungsänderung während des Hochlastbereiches (C) verändert.

2. Brennkraftmaschine nach Anspruch 1, **dadurch gekennzeichnet, daß** die Steuervorrichtung (40) die Kraftstoffeinspritzvorrichtung (23) auf der Basis der erfaßten Motorbetriebszustände steuert.

3. Brennkraftmaschine nach Anspruch 2, **dadurch gekennzeichnet, daß** die Motorbetriebszustände ein Kurbelwinkel ( R), eine Motordrehzahl (N) und eine Motorbelastung (L) sind.

4. Brennkraftmaschine nach einem der Ansprüche 1 bis 3, **gekennzeichnet durch** eine Drossel (29) innerhalb einer Einlaßstrecke (25) angeordnet ist.

5. Brennkraftmaschine nach dem Anspruch 3 oder 4, **dadurch gekennzeichnet, daß** die Steuervorrichtung (40) die Motorbelastung (L) auf der Basis eines Drosselöffnungsgrad (0) berechnet.

6. Brennkraftmaschine nach Anspruch 5, **dadurch gekennzeichnet, daß** die Steuervorrichtung (40) einen Zündzeitpunkts- Steuerabschnitt (40a), versehen mit Signalen entsprechend einer Motordrehzahl (N), einem Kurbelwinkel (R ) und einem Drosselöffnungsgrad (0), einen Kraftstoff- Zeitpunktsteuerabschnitt (40b), versehen mit Signalen entsprechend einer Motordrehzahl (N) und einem Kurbelwinkel (R), und einen Belastungsberechnungsabschnitt (40c) aufweist, versehen mit Signalen entsprechend eines Drosselöffnungsgrades (0).

7. Brennkraftmaschine nach Anspruch 6, **dadurch gekennzeichnet, daß** der Zündzeitpunkts- Steuerabschnitt (40a) eine Zündeinheit (22a) zum Zünden einer Zündkerze (22) über eine Zündspule (22b) steuert, und daß der Zündzeitpunkts- Steuerabschnitt (40b) die Kraftstoffeinspritzvorrichtung (23) steuert.

8. Brennkraftmaschine nach dem Anspruch 6 oder 7, **dadurch gekennzeichnet, daß** der Zündzeitpunkts- Steuerabschnitt (40a) mit einem drei-dimensionalen Plan, der im Voraus bestimmte Daten speichert, versehen ist und der Zündzeitpunkts- Steuerabschnitt (40b) mit einem zwei-dimensionalen Plan, der im Voraus bestimmte Daten speichert, versehen ist.

9. Brennkraftmaschine nach einem der Ansprüche 1 bis 8, **dadurch gekennzeichnet, daß** die Steuervorrichtung (40) angepaßt ist den Betrieb der Kraftstoffeinspritzvorrichtung (23) zu steuern, derart, daß in allen Belastungsbereichen, d. h. in dem Niedriglastbereich (A), in dem Mittellastbereich (B) und in dem Hochlastbereich (C) des Motors (11) Kraftstoff zumindest in zwei Raten während einer Umdrehung der Kurbelwelle (20) eingespritzt wird.

10. Verfahren zum Vorsehen eines Brennkraftmaschines vom Zweitakt- Typ mit Kraftstoff, wobei der Motor (11) aufweist zumindest einen Zylinder (16), bedeckt mit einem Zylinderkopf (12) und einen hin- und hergehenden Kolben (17) gleitend aufnehmend, verbunden über eine Pleuelstange (21) mit einer Kurbelwelle (20), die in einer Kurbelkammer (19) angeordnet ist, während der Zylinder (16), der Kolben (17) und der Zylinderkopf (12) eine Brennkammer (18) begrenzen, eine Spülstrecke (26), eine Auslaßstrecke (27), eine Kraftstoffeinspritzvorrichtung zum Kraftstoffeinspritzen in den Zylinder (16), wobei zumindest während des Mittellastbereiches des Motors (11) Kraftstoff in zumindest zwei Raten während einer Umdrehung der Kurbelwelle (20) eingespritzt wird, wobei die Steuervorrichtung (40) den Niedriglastbereich (A), den Mittellastbereich (B) und den Hochlastbereich (C) des Motors (11) steuert, derart, daß während des Niedriglastbereiches (A) Kraftstoff einmal unmittelbar vor der Zündung eingespritzt wird, wobei entsprechend der Belastungszunahme oder ―abnahme innerhalb des Niedriglastbereiches (A) die Kraftstoffmenge durch Verändern des Endes der Kraftstoffeinspritzung verändert wird; während des Mittellastbereiches (B) die erste Rate (BF) einer bestimmten Kraftstoffmenge vor der Zündung eingespritzt wird und die zweite Rate (AF) einer Kraftstoffmenge unmittelbar vor der Zündung eingespritzt wird, wobei entsprechend der Belastungszunahme oder ―abnahme innerhalb des Mittellastbereiches (B) die Kraftstoffmenge der ersten Rate verändert wird, und wobei während des Hochlastbereiches (C) Kraftstoff in einer Rate eingespritzt wird, deren Menge sich mit der Belastungsänderung während des Hochlastbereiches (C) verändert.

11. Verfahren nach Anspruch 10, **dadurch gekennzeichnet, daß** Motorbetriebszustände erfaßt werden, deren jeweiligen Signale zu einer Steuervorrichtung (40) zugeführt werden, die den Betrieb der Kraftstoffeinspritzvorrichtung (23) auf der Basis der zugeführten Signale steuert.

12. Verfahren nach Anspruch 11, **dadurch gekennzeichnet, daß** die Steuervorrichtung (40) die zugeführten Signale mit im Voraus eingespeicherten Daten vergleicht, um die Kraftstoffeinspritzvorrichtung (23) und eine Zündung des Motors (11) zu steuern.

13. Verfahren nach Anspruch 11 oder 12, **dadurch gekennzeichnet, daß** die Steuervorrichtung (40) die Belastungsbereiche steuert, den Niedriglastbereich (A), den Mittellastbereich (B) und den Hochlastbereich (C) des Motors (11), so daß während zumindest zwei von diesen Belastungsbereichen (A, B, C) zumindest zwei Raten von Kraftstoffeinspritzung durchgeführt werden.

## Revendications

1. Moteur à combustion interne (11) de type à cycle à deux temps comprenant au moins un cylindre (16) recouvert par une culasse (12) et recevant un piston à coulissement alternatif (17) connecté par l'intermédiaire d'une bielle (21) à un vilebrequin (20) qui est placé dans une chambre d'embiellage (19), par lequel ledit cylindre (16), ledit piston (17) et ladite culasse (12) définissent une chambre de combustion (18), une voie de balayage (26), une voie d'échappement (27), un dispositif d'injection de carburant destiné à injecter du carburant à l'intérieur dudit cylindre (16), et un dispositif de commande (40) adapté pour commander le fonctionnement dudit dispositif d'injection de carburant (23), de sorte qu'au moins au cours d'une plage de charge intermédiaire (B) dudit moteur (11) du carburant est injecté au moins en deux parties au cours d'un tour dudit vilebrequin (20), dans lequel ledit dispositif de commande (40) est adapté pour commander la plage de faible charge (A), la plage de charge intermédiaire (B) et la plage de charge élevée (C) dudit moteur (11), de sorte qu'au cours de la plage de faible charge (A) du carburant est injecté une fois immédiatement avant l'allumage, dans lequel, en fonction de l'augmentation ou de la diminution de la charge à l'intérieur de ladite plage de faible charge (A), la quantité de carburant à l'injection est modifiée en changeant la fin de l'injection de carburant ; au cours de la plage de charge intermédiaire (B), la première partie (BF) d'une quantité de carburant spécifiée est injectée avant l'allumage et la seconde partie (AF) d'une quantité de carburant est injectée immédiatement avant l'allumage, dans lequel, en fonction de l'augmentation ou de la diminution de la charge à l'intérieur de ladite plage de charge intermédiaire (B), la quantité de carburant de la première partie est modifiée, et dans lequel, au cours de la plage de charge élevée (C) du carburant est injecté en une partie dont la quantité est modifiée avec le changement de charge au cours de ladite plage de charge élevée (C).

2. Moteur à combustion interne selon la revendication 1, **caractérisé en ce que** ledit dispositif de commande (40) commande ledit dispositif d'injection de carburant (23) sur la base de conditions de fonctionnement du moteur détectées.

3. Moteur à combustion interne selon la revendication 2, **caractérisé en ce que** lesdites conditions de fonctionnement du moteur sont un angle de manivelle (R), une vitesse de rotation du moteur (N) et une charge du moteur (L).

4. Moteur à combustion interne selon l'une des revendications 1 à 3, **caractérisé par** un papillon des gaz placé à l'intérieur d'une voie d'admission (25).

5. Moteur à combustion interne selon la revendication 3 ou la revendication 4, **caractérisé en ce que** ledit dispositif de commande (40) calcule ladite charge du moteur (L) sur la base d'un degré d'ouverture du papillon des gaz (0).

6. Moteur à combustion interne selon la revendication 5, **caractérisé en ce que** ledit dispositif de commande (40) comprend une section de commande de calage de l'allumage (40a) à laquelle sont fournis des signaux correspondant à une vitesse de rotation du moteur (N), à un angle de manivelle (R) et à un degré d'ouverture de papillon des gaz (0), une section de commande de calage d'injection de carburant (40b) à laquelle sont fournis des signaux correspondant à une vitesse de rotation du moteur (N) et à un angle de manivelle (R), et une section de calcul de charge (40c) à laquelle sont fournis des signaux correspondants à un degré d'ouverture de papillon des gaz (0).

7. Moteur à combustion interne selon la revendication 6, **caractérisé en ce que** ladite section de commande de calage de l'allumage (40a) commande une unité d'allumage (22a) destinée à allumer une bougie d'allumage (22) par l'intermédiaire d'une bobine d'allumage (22b), et **en ce que** ladite section de commande de calage d'injection de carburant (40b) commande ledit dispositif d'injection de carburant (23).

8. Moteur à combustion interne selon la revendication 6 ou la revendication 7, **caractérisé en ce que** ladite section de commande de calage de l'allumage (40a) comporte une carte en trois dimensions stockant des données déterminées à l'avance, et **en ce que** ladite section de commande de calage d'injection de carburant (40b) comporte une carte en deux dimensions stockant des données déterminées à l'avance.

9. Moteur à combustion interne selon l'une des revendications 1 à 8, **caractérisé en ce que** ledit dispositif de commande (40) est adapté pour commander le fonctionnement dudit dispositif d'injection de carburant (23) de telle sorte que dans toutes les plages de charge, à savoir la plage de faible charge (A), la plage de charge intermédiaire (B) et la plage de charge élevée (C) dudit moteur (11), du carburant est injecté au moins en deux parties au cours d'un tour dudit vilebrequin (20).

10. Procédé d'alimentation en carburant d'un moteur à combustion interne de type à cycle à deux temps, ledit moteur (11) comprenant au moins un cylindre (16) recouvert par une culasse (12) et recevant un piston à coulissement alternatif (17) connecté par l'intermédiaire d'une bielle (21) à un vilebrequin (20) qui est placé dans une chambre d'embiellage (19), ledit cylindre (16), ledit piston (17) et ladite culasse (12) définissant une chambre de combustion (18), une voie de balayage (26), une voie d'échappement (27), et un dispositif d'injection de carburant destiné à injecter du carburant à l'intérieur dudit cylindre (16), dans lequel au moins au cours d'une plage de charge intermédiaire dudit moteur (11) du carburant est injecté au moins en deux parties au cours d'un tour dudit vilebrequin (20), dans lequel ledit dispositif de commande (40) commande la plage de faible charge (A), la plage de charge intermédiaire (B) et la plage de charge élevée (C) dudit moteur (11), de sorte qu'au cours de la plage de faible charge (A) du carburant est injecté une fois immédiatement avant l'allumage, dans lequel, en fonction de l'augmentation ou de la diminution de la charge à l'intérieur de ladite plage de faible charge (A), la quantité de carburant à l'injection est modifiée en changeant la fin de l'injection de carburant ; au cours de la plage de charge intermédiaire (B), la première partie (BF) d'une quantité de carburant spécifiée est injectée avant l'allumage et la seconde partie (AF) d'une quantité de carburant est injectée immédiatement avant l'allumage, dans lequel, en fonction de l'augmentation ou de la diminution de la charge à l'intérieur de ladite plage de charge intermédiaire (B), la quantité de carburant de la première partie est modifiée, et dans lequel, au cours de la plage de charge élevée (C) du carburant est injecté en une partie dont la quantité est modifiée avec le changement de charge au cours de ladite plage de charge élevée (C).

11. Procédé selon la revendication 10, **caractérisé en ce que** des conditions de fonctionnement du moteur sont détectées, dont les signaux respectifs sont fournis à un dispositif de commande (40) qui commande le fonctionnement dudit dispositif d'injection de carburant (23) sur la base desdits signaux fournis.

12. Procédé selon la revendication 11, **caractérisé en ce que** ledit dispositif de commande (40) compare les signaux fournis avec des données stockées à l'avance afin de commander ledit dispositif d'injection de carburant (23) et un allumage dudit moteur (11).

13. Procédé selon la revendication 11 ou la revendication 12, **caractérisé en ce que** ledit dispositif de commande (40) commande les plages de charge, la plage de faible charge (A), la plage de charge intermédiaire (B) et la plage de charge élevée (C) dudit moteur (11), de sorte qu'au cours d'au moins deux de ces plages de charge (A, B, C) au moins deux parties de l'injection de carburant sont effectuées.
